# EUROPÄISCHE PATENTSCHRIFT

(11) **EP 1 173 498 B1**
(45) Veröffentlichungstag und Bekanntmachung des Hinweises auf die Patenterteilung: **11.08.2004**
(21) Anmeldenummer: 00917070.5
(22) Anmeldetag: 11.04.2000
(51) Int. Cl.: C08G 65/10, C08G 65/26

(54) **LANGKETTIGE POLYETHERPOLYOLE MIT HOHEM ANTEIL PRIMÄRER OH-GRUPPEN**
LONG-CHAIN POLYETHER POLYOLS WITH A HIGH PROPORTION OF PRIMARY OH GROUPS
POLYETHERPOLYOLS A CHAINE LONGUE PRESENTANT UNE PROPORTION ELEVEE DE GROUPES OH PRIMAIRES

(30) Priorität: 24.04.1999 DE 19918727
(43) Veröffentlichungstag der Anmeldung: 23.01.2002
(73) Patentinhaber: Bayer MaterialScience AG, 51368 Leverkusen (DE)
(72) Erfinder: HOFMANN, Jörg, D-47829 Krefeld (DE); GUPTA, Pramod, D-50181 Bedburg (DE); DIETRICH, Manfred, D-51373 Leverkusen (DE)
(86) Internationale Anmeldenummer: PCT/EP2000/003217
(87) Internationale Veröffentlichungsnummer: WO 2000/064963

(56) Entgegenhaltungen:
- EP-A- 0 379 184
- EP-A- 0 558 840
- US-A- 4 942 214
- US-A- 5 648 559
- US-A- 5 668 191

## Beschreibung

Die Erfindung betrifft langkettige Polyetherpolyole mit hohem Anteil primärer OH-Gruppen sowie ein Verfahren zu deren Herstellung mittels Doppelmetallcyanid(DMC)-Katalyse.

Langkettige Polyetherpolyole mit hohen Anteilen primärer OH-Gruppen werden für viele Polyurethan-Anwendungen benötigt. Sie finden z.B. Einsatz in Heiß- und Kaltformschäumen sowie in RIM-Anwendungen (siehe z.B. Gum, Riese, Ulrich (Hrsg.): "Reaction Polymers", Hanser Verlag, München 1992, S. 67-70). Langkettige Polyetherpolyole mit hohen Anteilen primärer OH-Gruppen werden üblicherweise in einem zweistufigen Verfahren hergestellt, bei dem zunächst Propylenoxid (oder eine Mischung aus Propylenoxid und Ethylenoxid) in Gegenwart von Starterverbindungen mit aktiven Wasserstoffatomen und eines basischen Katalysators polymerisiert wird, wobei ein Polyetherpolyol mit überwiegend sekundären OH-Gruppen erhalten wird. In der zweiten Stufe, dem sogenannten EO-Tip, wird dem basischen Polymerisat dann Ethylenoxid zugegeben, wobei der überwiegende Teil der sekundären OH-Gruppen in primäre OH-Gruppen umgewandelt wird. Bei diesem Verfahren wird üblicherweise der gleiche basische Katalysator (z.B. KOH) für die Propoxylierungsund Ethoxylierungsreaktion verwendet.

Doppelmetallcyanid(DMC)-Katalysatoren für die Herstellung von Polyetherpolyolen sind seit langem bekannt (siehe beispielsweise US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels basischer Katalysatoren. Die so erhaltenen Polyetherpolyole können zu hochwertigen Polyurethanen (z.B. Elastomeren, Schäumen, Beschichtungen) verarbeitet werden. Verbesserte DMC-Katalysatoren, wie sie z.B. in EP-A 700 949, EP-A 761 708, WO 97/40086, WO 98/16310, DE-A 197 45 120, DE-A 197 57 574 und DE-A 198 102 269 beschrieben sind, besitzen zudem eine außerordentlich hohe Aktivität und ermöglichen die Herstellung von Polyetherpolyolen bei sehr geringer Katalysatorkonzentration (25 ppm oder weniger), so dass eine Abtrennung des Katalysators aus dem Polyol nicht mehr erforderlich ist.

Nachteilig beim Einsatz von DMC-Katalysatoren für die Polyetherpolyol-Herstellung ist, dass diese Katalysatoren im Gegensatz zu basischen Katalysatoren keinen direkten EO-Tip ermöglichen. Gibt man Ethylenoxid (EO) zu einem einen DMC-Katalysator enthaltenden Poly(oxypropylen)polyol, so erhält man eine heterogene Mischung, die zum großen Teil aus unreagiertem Poly(oxypropylen)polyol (mit überwiegend sekundären OH-Gruppen) und zu einem kleinen Teil aus hochethoxyliertem Poly(oxypropylen)polyol und/oder Polyethylenoxid besteht. Der übliche Weg, um DMC-Polyole mit hohem Anteil primärer OH-Gruppen zu erhalten, besteht deshalb darin, den EO-Tip in einem zweiten, separaten Schritt mittels konventioneller Basen-Katalyse (z.B. KOH-Katalyse) durchzuführen (siehe z.B. US-A 4 355 188, US-A 4 721 818, EP-A 750 001). Nachteilig bei diesem zweistufigen Verfahren ist insbesondere, dass das dabei erhaltene basische Polymerisat in sehr aufwendiger Weise, z.B. durch Neutralisation, Filtration und Entwässerung aufgearbeitet werden muss.

US-A 4 942 214, EP-A 558 840 und EP-A 379 184 offenbaren die Herstellung von Polyetherpolyolen mit hohem Gehalt an Ethylenoxid-Einheiten durch basenkatalysierte Alkoxylierung von Starterverbindungen mit einem Gemisch aus Ethylenoxid und Propylenoxid.

Aus US-A 5 648 559 gehen durch DMC-Katalyse hergestellte Poly(oxyalkylen)-polyole mit Poly(oxypropylen/oxyethylen)-Endblöcken hervor, die einen Gehalt an primären Hydroxylgruppen < 50 mol% aufweisen. Der maximale Gesamtgehalt an Oxyethylen-Einheiten in diesen Polyolen beträgt 20 Gew.-%. In US-A 5 700 847 werden Poly(oxyalkylen)polyole beschrieben, die bis zu 25 Gew.-% Oxyethylen-Einheiten enthalten, wobei diese in Mischblöcken oder reinen Poly(oxyethylen)-Endblöcken enthalten sein können. Die ohne EO-Tip hergestellten Polyole weisen <50 mol% primäre OH-Gruppen auf. In US-A 5 668 191 werden ebenfalls Poly(oxyalkylenpolyole) mit maximal 20 Gew.-% Oxyethylen-Einheiten und weniger als 50 mol% primären Hydroxylgruppen eingesetzt.

Es wurde nun gefunden, dass man durch DMC-katalysierte Polyaddition eines Ethylenoxid(EO)/ Propylenoxid(PO)-Gemisches als Endblock an Starterverbindungen mit aktiven Wasserstoffatomen langkettige Polyetherpolyole mit einem Anteil an primären OH-Gruppen >50 mol% erhalten kann, wenn man den Gesamtgehalt an Oxyethyleneinheiten im Polyol auf mehr als 25 Gew.-% einstellt.

Gegenstand der vorliegenden Erfindung sind langkettige Polyetherpolyole mit einem Anteil an primären OH-Gruppen von 50 bis 95 mol%, bevorzugt 50 bis 90 mol%, und einem Gesamtgehalt an Oxyethyleneinheiten von mehr als 25 Gew.-%, bevorzugt mehr als 30 Gew.-%, besonders bevorzugt mehr als 35 Gew.-%, die einen in Gegenwart eines DMC-Katalysators hergestellten Poly(oyxethylen/oxypropylen) Endblock aufweisen.

Gegenstand der Erfindung ist weiterhin ein Verfahren zur Herstellung der erfindungsgemäßen Polyole durch Polyaddition eines Ethylenoxid(EO)/Propylenoxid(PO)-Gemisches in einem Gewichtsverhältnis EO:PO von 40:60 bis 95:5, bevorzugt 50:50 bis 90:10, besonders bevorzugt 60:40 bis 90:10, in Gegenwart von DMC-Katalysatoren als Endblock an Starterverbindungen mit aktiven Wasserstoffatomen.

Die für das erfindungsgemäße Verfahren geeigneten DMC-Katalysatoren sind im Prinzip bekannt und ausführlich beschrieben im oben angeführten Stand der Technik. Bevorzugt eingesetzt werden verbesserte, hochaktive DMC-Katalysatoren, die z.B. beschrieben sind in EP-A 700 949, EP-A 761 708, WO 97/40086, WO 98/16310, DE-A 197 45 120, DE-A 197 57 574 und DE-A 198 102 269. Ein typisches Beispiel sind die in EP-A 700 949 beschriebenen DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer 500 g/mol enthalten.

Als Starterverbindungen mit aktiven Wasserstoffatomen werden vorzugsweise Verbindungen mit Molekulargewichten von 18 bis 2.000 g/mol, bevorzugt 200 bis 2.000 g/mol und 1 bis 8, bevorzugt 2 bis 6 Hydroxylgruppen eingesetzt. Beispielhaft genannt seien Butanol, Ethylenglykol, Diethylenglykol, Triethylenglykol, 1,2-Propylenglykol, 1,4-Butandiol, 1,6-Hexandiol, Bisphenol-A, Trimethylolpropan, Glycerin, Pentaerythrit, Sorbit, Rohrzucker, abgebaute Stärke oder Wasser.

Vorteilhafter werden solche Starterverbindungen mit aktiven Wasserstoffatomen eingesetzt, die z.B. durch konventionelle Alkalikatalyse aus den zuvor genannten niedermolekularen Startern hergestellt wurden und oligomere Alkoxylierungsprodukte darstellen mit zahlenmittleren Molekulargewichten von 200 bis 2.000 g/mol.

Bevorzugt werden oligomere propoxylierte Starterverbindungen mit 1 bis 8 Hydroxylgruppen, besonders bevorzugt von 2 bis 6 Hydroxylgruppen, und zahlenmittleren Molekulargewichten von 200 bis 2.000 g/mol eingesetzt.

Die Starterverbindungen mit aktiven Wasserstoffatomen können direkt durch DMC-katalysierte Polyaddition mit einem Ethylenoxid/Propylenoxid-Gemisch im Gewichtsverhältnis EO:PO von 40:60 bis 95:5, bevorzugt 50:50 bis 90:10, besonders bevorzugt 60:40 bis 90:10, als Endblock zu einem langkettigen Polyetherpolyol mit hohem Anteil primärer OH-Gruppen und einem Gehalt an Oxyethylen-Einheiten > 25 Gew.-%, bevorzugt > 30 Gew.-%, besonders bevorzugt > 35 Gew.-%, umgesetzt werden.

Bevorzugt ist es aber, die Starterverbindung zunächst durch DMC-katalysierte Propoxylierung zu verlängern, vorzugsweise auf ein zahlenmittleres Molekulargewicht zwischen 500 und 15.000 g/mol, und aus dieser verlängerten propoxylierten Zwischenstufe anschließend durch DMC-katalysierte Polyaddition mit einem Ethylenoxid/Propylenoxid-Gemisch im Gewichtsverhältnis EO:PO von 40:60 bis 95:5, bevorzugt 50:50 bis 90:10, besonders bevorzugt 60:40 bis 90:10, als Endblock ein langkettiges Polyetherpolyol mit hohem Anteil primärer OH-Gruppen und einem Gehalt an Oxyethylen-Einheiten > 25 Gew.-%, bevorzugt > 30 Gew.-%, besonders bevorzugt > 35 Gew.-% herzustellen.

Besonders bevorzugt wird das erfindungsgemäße Verfahren in diesem Falle als sogenannte "Ein-Topf-Reaktion" durchgeführt, bei dem nach der DMC-katalysierten Propoxylierung anschließend ohne zwischenzeitliche Aufarbeitung des den DMC-Katalysator enthaltenden Polymerisats im gleichen Reaktionsgefäß und mit dem gleichen DMC-Katalysator die Polyaddition des Ethylenoxid/Propylenoxid-Gemisches als Endblock durchgeführt wird.

Die DMC-katalysierte Polyaddition des Ethylenoxid/Propylenoxid-Gemisches als Endblock an die Starterverbindungen (bzw. an die verlängerten propoxylierten Zwischenstufen) erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,001 bis 20 bar durchgeführt werden. Die Polyaddition kann in Substanz oder in einem inerten, organischen Lösungsmittel, wie Toluol oder THF, durchgeführt werden. Die Menge an Lösungsmittel beträgt üblicherweise 10 bis 30 Gew.-%, bezogen auf die Menge des herzustellenden Polyetherpolyols.

Die Polyaddition kann kontinuierlich oder diskontinuierlich, z.B. in einem Batchoder im Semibatchverfahren durchgeführt werden.

Das Gewichtsverhältnis des umzusetzenden Ethylenoxid/Propylenoxid-Gemisches beträgt 40:60 bis 95:5, bevorzugt 50:50 bis 90:10, besonders bevorzugt 60:40 bis 90:10.

Die Molekulargewichte der nach dem erfindungsgemäßen Verfahren hergestellten Polyetherpolyole mit hohem Anteil primärer OH-Gruppen liegen im Bereich zwischen 1.000 und 100.000 g/mol, bevorzugt im Bereich von 1.500 bis 50.000 g/mol, besonders bevorzugt im Bereich von 2.000 bis 20.000 g/mol.

Die Anteile primärer OH-Gruppen können aus den ¹H-NMR-Spektren der peracetylierten Polyetherpolyole gemäß ASTM-D 4273-83 ermittelt werden. Die Anteile primärer OH-Gruppen in den Polyetherpolyolen betragen 50 bis 95 mol%, bevorzugt 50 bis 90 mol%. Die Anteile primärer OH-Gruppen der Polyetherpolyole sind von den Reaktionsbedingungen wie Druck, Temperatur und Lösungsmittel sowie von der Zusammensetzung des eingesetzten Ethylenoxid/ Propylenoxid-Gemisches abhängig. Im allgemeinen führt eine Erhöhung des Ethylenoxid-Gehalts im Ethylenoxid/Propylenoxid-Gemisch zu einer Erhöhung des Anteils primärer OH-Gruppen im Polyetherpolyol.

Die DMC-Katalysatorkonzentration wird so gewählt, dass unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.%, besonders bevorzugt im Bereich von 0,001 bis 0,01 Gew.-%, bezogen auf die Menge des herzustellenden Polyetherpolyols.

Durch hochaktive DMC-Katalysatoren ist die Herstellung langkettiger Polyetherpolyole mit hohem Anteil primärer OH-Gruppen bei sehr niedriger Katalysatorkonzentration (50 ppm oder weniger, bezogen auf die Menge des herzustellenden Polyetherpolyols) möglich. Werden die auf diese Weise hergestellten Polyetherpolyole zur Herstellung von Polyurethanen verwendet, kann auf eine Entfernung des Katalysators aus dem Polyetherpolyol verzichtet werden, ohne dass die Produktqualitäten des erhaltenen Polyurethans nachteilig beeinflusst werden.

### Beispiele

### Herstellung von hochaktivem DMC-Katalysator (Synthese gemäß EP-A 700 949).

Eine Lösung von 12,5 g (91,5 mMol) Zinkchlorid in 20 ml destilliertem Wasser gibt man unter starkem Rühren (24.000 U/min) zu einer Lösung von 4 g (12 mMol) Kaliumhexacyanocobaltat in 70 ml destilliertem Wasser. Sofort danach wird eine Mischung aus 50 g tert.-Butanol und 50 g destilliertem Wasser zur gebildeten Suspension gegeben und anschließend 10 min lang stark gerührt (24.000 U/min). Dann wird eine Mischung aus 1 g Polypropylenglykol mit zahlenmittlerer Molmasse 2.000 g/mol, 1 g tert.-Butanol und 100 g destilliertem Wasser zugegeben und 3 min gerührt (1.000 U/min). Der Feststoff wird durch eine Filtration isoliert, dann 10 min mit einer Mischung aus 70 g tert.-Butanol, 30 g destilliertem Wasser und 1 g des obigen Polypropylenglykols gerührt (10.000 U/min) und erneut filtriert. Abschließend wird noch einmal 10 min mit einer Mischung aus 100 g tert.-Butanol und 0,5 g des obigen Polypropylenglykols gerührt (10.000 U/min). Nach Filtration wird der Katalysator bei 50°C und Normaldruck bis zur Gewichtskonstanz getrocknet.

Ausbeute an getrocknetem, pulverförmigem Katalysator: 6,23 g

### Beispiel 1

In einem 10 l Druckglaskolben werden 873 g Poly(oxypropylen)triol-Starterverbindung (zahlenmittleres Molekulargewicht = 440 g/mol) und 0,30 g DMC-Katalysator (50 ppm, bezogen auf die Menge des herzustellenden langkettigen Polyetherpolyols) unter Schutzgas (Stickstoff) vorgelegt und unter Rühren auf 105°C aufgeheizt. Anschließend wird Ethylenoxid/Propylenoxid-Gemisch im Gewichtsverhältnis 70:30 (ca. 100 g) auf einmal zudosiert, bis der Gesamtdruck auf 1,5 bar angestiegen ist. Weiteres Ethylenoxid/Propylenoxid-Gemisch wird erst dann wieder zudosiert, wenn ein beschleunigter Druckabfall beobachtet wird. Dieser beschleunigte Druckabfall zeigt an, dass der Katalysator aktiviert ist. Anschließend wird das restliche Ethylenoxid/Propylenoxid-Gemisch im Gewichtsverhältnis 70:30 (5027 g) kontinuierlich bei einem konstanten Gesamtdruck von 1.5 bar zudosiert. Nach vollständiger Alkylenoxid-Dosierung und 5 Stunden Nachreaktionszeit bei 105°C werden flüchtige Anteile bei 105°C (1 mbar) abdestilliert und anschließend auf Raumtemperatur abgekühlt.

Das erhaltene langkettige Polyetherpolyol besitzt eine OH-Zahl von 59,1 mg KOH/g, einen Doppelbindungsgehalt von 2 mMol/kg, einen Anteil primärer OH-Gruppen von 56 mol% und einen Gehalt an Oxyethylen-Einheiten von 59,8 Gew.-%.

### Beispiel 2

In einem 10 1 Druckglaskolben werden 873 g Poly(oxypropylen)triol-Starterverbindung (zahlenmittleres Molekulargewicht = 440 g/mol) und 0,30 g DMC-Katalysator (50 ppm, bezogen auf die Menge des herzustellenden langkettigen Polyetherpolyols) unter Schutzgas (Stickstoff) vorgelegt und unter Rühren auf 105°C aufgeheizt. Anschließend wird Ethylenoxid/Propylenoxid-Gemisch im Gewichtsverhältnis 89,4:10,6 (ca. 100 g) auf einmal zudosiert, bis der Gesamtdruck auf 1,5 bar angestiegen ist. Weiteres Ethylenoxid/ Propylenoxid-Gemisch wird erst dann wieder zudosiert, wenn ein beschleunigter Druckabfall beobachtet wird. Dieser beschleunigte Druckabfall zeigt an, dass der Katalysator aktiviert ist. Anschließend wird das restliche Ethylenoxid/Propylenoxid-Gemisch im Gewichtsverhältnis 89,4:10,6 (5027 g) kontinuierlich bei einem konstanten Gesamtdruck von 1,5 bar zudosiert. Nach vollständiger Alkylenoxid-Dosierung und 5 Stunden Nachreaktionszeit bei 105°C werden flüchtige Anteile bei 105°C (1 mbar) abdestilliert und anschließend auf Raumtemperatur abgekühlt.

Das erhaltene langkettige Polyetherpolyol besitzt eine OH-Zahl von 58,5 mg KOH/g, einen Doppelbindungsgehalt von 2 mMol/kg, einen Anteil primärer OH-Gruppen von 81 mol% und einen Gehalt an Oxyethylen-Einheiten von 76,4 Gew.-%.

### Beispiel 3

In einem 10 1 Druckglaskolben werden 840 g Poly(oxypropylen)triol-Starterverbindung (zahlenmittleres Molekulargewicht = 446 g/mol) und 0,30 g DMC-Katalysator (50 ppm, bezogen auf die Menge des herzustellenden langkettigen Polyetherpolyols) unter Schutzgas (Stickstoff) vorgelegt und unter Rühren auf 105°C aufgeheizt. Anschließend wird Propylenoxid (ca. 100 g) auf einmal zudosiert, bis der Gesamtdruck auf 1,5 bar angestiegen ist. Weiteres Propylenoxid wird erst dann wieder zudosiert, wenn ein beschleunigter Druckabfall beobachtet wird. Dieser beschleunigte Druckabfall zeigt an, dass der Katalysator aktiviert ist. Dann wird das restliche Propylenoxid (2152 g) kontinuierlich bei einem konstanten Gesamtdruck von 1,5 bar zudosiert. Anschließend wird Ethylenoxid/Propylenoxid-Gemisch im Gewichtsverhältnis 80:20 (2908 g) kontinuierlich bei einem konstanten Gesamtdruck von 1,5 bar zudosiert. Nach vollständiger Alkylenoxid-Dosierung und 5 Stunden Nachreaktionszeit bei 105°C werden flüchtige Anteile bei 105°C (1 mbar) abdestilliert und anschließend auf Raumtemperatur abgekühlt.

Das erhaltene langkettige Polyetherpolyol besitzt eine OH-Zahl von 53,9 mg KOH/g, einen Doppelbindungsgehalt von 5 mMol/kg, einen Anteil primärer OH-Gruppen von 52 mol% und einen Gehalt an Oxyethylen-Einheiten von 38,8 Gew.-%.

### Beispiel 4

In einem 10 1 Druckglaskolben werden 840 g Poly(oxypropylen)triol-Starterverbindung (zahlenmittleres Molekulargewicht = 446 g/mol) und 0,30 g DMC-Katalysator (50 ppm, bezogen auf die Menge des herzustellenden langkettigen Polyetherpolyols) unter Schutzgas (Stickstoff) vorgelegt und unter Rühren auf 105°C aufgeheizt. Anschließend wird Propylenoxid (ca. 100 g) auf einmal zudosiert, bis der Gesamtdruck auf 1,5 bar angestiegen ist. Weiteres Propylenoxid wird erst dann wieder zudosiert, wenn ein beschleunigter Druckabfall beobachtet wird. Dieser beschleunigte Druckabfall zeigt an, dass der Katalysator aktiviert ist. Dann wird das restliche Propylenoxid (989 g) kontinuierlich bei einem konstanten Gesamtdruck von 1,5 bar zudosiert. Anschließend wird Ethylenoxid/Propylenoxid-Gemisch im Gewichtsverhältnis 80:20 (4071 g) kontinuierlich bei einem konstanten Gesamtdruck von 1,5 bar zudosiert. Nach vollständiger Alkylenoxid-Dosierung und 5 Stunden Nachreaktionszeit bei 105°C werden flüchtige Anteile bei 105°C (1 mbar) abdestilliert und anschließend auf Raumtemperatur abgekühlt.

Das erhaltene langkettige Polyetherpolyol besitzt eine OH-Zahl von 54,0 mg KOH/g, einen Doppelbindungsgehalt von 2 mMol/kg, einen Anteil primärer OH-Gruppen von 67 mol% und einen Gehalt an Oxyethylen-Einheiten von 54,3 Gew.-%.

## Patentansprüche

1. Polyetherpolyole mit einem Anteil an primären OH-Gruppen von 50 bis 95 mol-% und einem Gesamtgehalt an Oxyethyleneinheiten von mehr als 25 Gew.-%, die einen in Gegenwart eines DMC-Katalysators hergestellten Poly(oxyethylen/axypropylen)-Endblock aufweisen.

2. Polyetherpolyole gemäß Anspruch 1 mit einem zahlenmittleren Molekulargewicht von 1.000 bis 100.000 g/mol.

3. Verfahren zur Herstellung der Polyole gemäß Anspruch 1 oder 2, bei dem Starterverbindungen mit aktiven Wasserstoffatomen durch DMC-katalysierte Polyaddition mit einem Ethylenoxid/Propylenoxid-Gemisch im Gewichtsverhältnis EO:PO von 40:60 bis 95:5 umgesetzt werden.

4. Verfahren nach Anspruch 3, bei dem Starterverbindungen mit 1 bis 8 Hydroxylgruppen und einem Molekulargewicht von 18 bis 2.000 g/mol eingesetzt werden.

5. Verfahren nach Anspruch 3 oder 4, bei dem als Starterverbindungen mit aktiven Wasserstoffatomen oligomere propoxylierte Starterverbindungen mit 1 bis 8 Hydroxylgruppen und zahlenmittleren Molekulargewichten von 200 bis 2.000 g/mol eingesetzt werden.

6. Verfahren nach einem der Ansprüche 3 bis 5, bei dem die Starterverbindung mit aktiven Wasserstoffatomen zunächst durch DMC-katalysierte Propoxylierung verlängert wird, und aus dieser verlängerten propoxylierten Zwischenstufe anschließend durch DMC-katalysierte Polyaddition mit einem Ethylenoxid/Propylenoxid-Gemisch im Gewichtsverhältnis EO:PO von 40:60 bis 95:5 als Endblock ein langkettiges Polyetherpolyol mit einem Anteil primärer OH-Gruppen von 50 bis 95 mol% und einem Gesamtgehalt an Oxyethyleneinheiten von mehr als 25 Gew.-% hergestellt wird.

7. Verfahren nach einem der Ansprüche 3 bis 6, bei dem die DMC-katalysierte Polyaddition des Ethylenoxid/Propylenoxid-Gemisches als Endblock an die Starterverbindungen mit aktiven Wasserstoffatomen bei Temperaturen von 20 bis 200°C, Gesamtdrücken von 0,001 bis 20 bar und gegebenenfalls in Gegenwart eines inerten organischen Lösungsmittels durchgeführt wird.

8. Verfahren nach einem der Ansprüche 3 bis 7, bei dem der DMC-Katalysator in Konzentrationen von 0,001 Gew.-% bis 0,1 Gew.-%, bezogen auf die Menge des herzustellenden Polyetherpolyols, eingesetzt wird.

9. Verwendung der Polyetherpolyole nach Anspruch 1 oder 2 zur Herstellung von Polyurethanen, Polyurethanharnstoffen oder Polyharnstoffen.

## Claims

1. Polyether polyols having a content of primary OH groups of 50 to 95 mol% and a total content of oxyethylene units of more than 25 wt.%, which have a poly(oxyethylene/oxypropylene) end block produced in the presence of a DMC catalyst.

2. Polyether polyols according to claim 1, having a number average molecular weight of 1,000 to 100,000 g/mol.

3. Process for producing the polyols according to claim 1 or 2, wherein starter compounds having active hydrogen atoms are reacted, by DMC-catalysed polyaddition, with an ethylene oxide/propylene oxide mixture in the weight ratio EO:PO of 40:60 to 95:5.

4. Process according to claim 3, wherein starter compounds having 1 to 8 hydroxyl groups and a molecular weight of 18 to 2,000 g/mol are used.

5. Process according to claim 3 or 4, wherein oligomeric propoxylated starter compounds having 1 to 8 hydroxyl groups and number average molecular weights of 200 to 2,000 g/mol are used as starter compounds having active hydrogen atoms.

6. Process according to one of claims 3 to 5, wherein the starter compound having active hydrogen atoms is first of all extended by DMC-catalysed propoxylation, and subsequently, from this extended propoxylated intermediate, by DMC-catalysed polyaddition to an ethylene oxide/propylene oxide mixture in the weight ratio EO:PO of 40:60 to 95:5 as end block, a long-chain polyether polyol having a content of primary OH groups of 50 to 95 mol% and a total content of oxyethylene units of more than 25 wt.% is produced.

7. Process according to one of claims 3 to 6, wherein the DMC-catalysed polyaddition of the ethylene oxide/propylene oxide mixture as end block to the starter compounds having active hydrogen atoms is carried out at temperatures of 20°C to 200°C, at total pressures of 0.001 to 20 bar and optionally in the presence of an inert organic solvent.

8. Process according to one of claims 3 to 7, wherein the DMC-catalyst is used in concentrations of 0.001 wt.% to 0.1 wt.%, based on the quantity of the polyether polyol to be produced.

9. Use of the polyether polyols according to claim 1 or 2 for the production of polyurethanes, polyurethane ureas or polyureas.

## Revendications

1. Polyéther-polyols à une proportion de groupes OH primaires de 50 à 95 mol % et une teneur totale en motifs oxyéthylène supérieure à 25 % en poids, et qui ont un bloc terminal poly(oxyéthylène/oxypropylène) préparé en présence d'un catalyseur à base de cyanure métallique double.

2. Polyéther-polyols selon la revendication 1, à un poids moléculaire moyen, moyenne en nombre de 1 000 à 100 000 g/mol.

3. Procédé pour la préparation des polyols selon la revendication 1 ou 2 selon lequel on fait réagir un composé de départ à atomes d'hydrogène actifs par polyaddition, catalysée à l'aide d'un cyanure métallique double, d'un mélange oxyde d'éthylène/oxyde de propylène à des proportions relatives en poids OE/OP de 40:60 à 95:5.

4. Procédé selon la revendication 3, selon lequel on utilise un composé de départ portant 1 à 8 groupes hydroxy et ayant un poids moléculaire de 18 à 2 000 g/mol.

5. Procédé selon la revendication 3 ou 4, selon lequel on utilise en tant que composé de départ à atomes d'hydrogène actifs un composé de départ propoxylé oligomère contenant 1 à 8 groupes hydroxy et ayant un poids moléculaire moyen, moyenne en nombre, de 200 à 2000 g/mol.

6. Procédé selon l'une des revendications 3 à 5, selon lequel on allonge d'abord le composé de départ à atomes d'hydrogène actifs par propoxylation catalysée à l'aide d'un cyanure métallique double, et à partir de ce produit intermédiaire propoxylé allongé, on prépare ensuite, par polyaddition, catalysée à l'aide d'un cyanure métallique double, d'un mélange oxyde d'éthylène/oxyde de propylène à des proportions relatives en poids OE/OP de 40:60 à 95:5 sous forme de bloc terminal, un polyéther-polyol à longue chaîne contenant 50 à 95 mol % de groupes OH primaires et plus de 25 % en poids au total de motifs oxyéthylène.

7. Procédé selon l'une des revendications 3 à 6, selon lequel la polyaddition catalysée par un cyanure métallique double du mélange oxyde d'éthylène/oxyde de propylène sous forme de bloc terminal sur le composé de départ à atomes d'hydrogène actifs est réalisée à des températures de 20 à 200°C, des pressions totales de 0,001 à 20 bars et le cas échéant en présence d'un solvant organique inerte.

8. Procédé selon l'une des revendications 3 à 7, selon lequel le cyanure métallique double servant de catalyseur est mis en oeuvre à des concentrations de 0,001 % à 0,1 % du poids du polyéther-polyol en cours de préparation.

9. Utilisation des polyéther-polyols selon la revendication 1 ou 2 pour la préparation de polyuréthannes, de polyuréthanne-urées ou de polyurées.
